# EUROPEAN PATENT APPLICATION

(11) **EP 0 687 491 A1**
(43) Date of publication of application: **20.12.1995**
(21) Application number: 94109310.6
(22) Date of filing: 16.06.1994
(51) Int. Cl.: B01D 11/02

(54) **Simulated moving bed chromatographic separation process**

(71) Applicant: DAICEL CHEMICAL INDUSTRIES, LTD., Sakai-shi, Osaka (JP)
(72) Inventor: Ikeda, Hirokazu, Ako-shi, Hyogo-ken (JP); Negawa, Masakazu, Himeji-shi, Hyogo-ken (JP)
(74) Representative: Merkle, Gebhard

(57) **Abstract**

In the simulated moving bed chromatographic separation process, a supercritical fluid is used as an elutant and thereby efficiency in separation and operation is remarkably improved and the concentration step after the chromatographic separation is not required.

## Description

### Field of the Invention

This invention relates to a simulated moving bed chromatographic separation process. More particularly, the present invention relates to a new simulated moving bed chromatographic separation process in which the number of theoretical plates of a unit column is substantially increased and efficiency in separation and operation is excellent and the subsequent concentration operation is not required.

### Background of the Invention

Chromatographic separation process has been generally employed as measures for industrially isolating a specific ingredient from a stock solution containing a plurality of substances such as isomeric mixtures. The chromatographic separation process includes batch process and simulated moving bed process. In both cases, adsorbents such as ion-exchange resins, zeolite, silica gel, etc. are used and aqueous and organic solvents are used as elutants. In chromatographic separation, when a stock solution is pressed together with an elutant through a column packed with an adsorbent, a specific ingredient and the other ingredient or ingredients contained in the stock solution are separated because of the difference in adsorbability thereof by the adsorbent and thus a solution containing the specific ingredient and another solution not containing said ingrededient are obtained. The specific ingredient can be isolated by recovering the solution containing it and concentrating it.

However, the diffusion rate of elutants in the unit column is limited and, therefore, it is difficult to increase the number of theoretical plates of a unit column in order to improve separation efficiency. Also the concentration of the object ingredient in the separated solution is low and, therefore, a concentration treatment is necessary and a storage equipment for the dilute solution is required. Concentration of a dilute solution is inefficient and disadvantageous from the industrial viewpoint. That is, a large scale equipment is required and a large scale plant unit is necessary for a large scale separation

The present invention is to provide an improved simulated moving bed chromatographic separation process, which offsets the above described disadvantages with increased number of the theoretical plates of a unit column, is excellent in separation and operation efficiency and requires no subsequent concentration operation.

After intensive study on simulated moving bed chromatographic separation process in order to solve the above-described problems, we have found that if a supercritical fluid is employed in the simulated moving bed choromatographic separation of a specific objects substance from a stock material containing a plurality of substances, the number of theoretical plates of a unit column is improved thus separation can be more efficiently effected, and can eliminate the concentration operation.

### Disclosure of the Invention

This invention provides a simulated moving bed chromatographic process for separating a mixture of substances comprising: forming a circulation circuit consisting of a plurality of columns each provided with an inlet port and an outlet port and packed with a solid adsorbent, said columns being serially and endlessly connected; introducing a supercritical fluid as an elutant into a first unit column via its inlet port (a first inlet) for forced circulation through the circuit; letting said fluid desorb the substance adsorbed in said column and several columns that follow; taking out a solution rich in the substance which has been adsorbed in these columns and desorbed therefrom via an outlet port (a first outlet) of the last one of these columns; intorducing a stock solution containing a plurality of substances to be separated into a next column via the inlet port thereof (a second inlet) making the object substance adsorbed on the absorbent in said column and several columns that follow; taking out the raffinate which has not been adsorbed in these columns via an outlet port of the last columns of these columns (a second outlet); passing the remaining solution and supercritical fluid through several unit columns that follow and recirculating them to the first column, shifting the working first inlet; the working first outlet, and the working second inlet and the working second outlet successively in the direction of the fluid flow column by column at a predetermined interval and thus separating the adsorbable substance and the non-adsorbable substances.

This invention further provides a simulated moving bed chromatographic separation process as descried above, wherein the solid adsorbent is a filler for optical resolution.

This invention still further provides a simulated moving bed chromatographic separation process as described above, wherein the solid adsorbent is selected from a group consisting of particles of a cellulose ester derivative, particles of a cellulose carbamate derivative and those substances carried on a carrier.

This invention still further provides a simulated moving bed chromatographic separation process as described above, wherein the mixture of substances to be separated is a mixture ogf optical isomers, a mixture of diastereomers, or a mixture of structural isomers.

This invention still further provides a simulated moving bed chromatographic separation process as described above, wherein each one-fourth of the total columns is alloted to the desorption step, the purification step, the adsorption step and the elutant recovery step.

The total number of the columns is theoretically at least four. Therefore, the term "several" includes zero but usually 8 or more columns are used. Usually an even number of columns are used and an equal number of colums are allotted to each step.

### Brief Description of the Drawings

Now the invention will be specifically described with reference to the attached drawings.

Fig. 1 is a schematic presentation of a typical apparatus used for the simulated moving bed chromatographic separation process of the present invention.

Fig. 2 is a simplified schematic presentation of an embodiment of the simulated moving bed chromatographic separation process of the present invention using twelve unit columns.

### Specific Description of the Invention

In the following embodiment of the process of the present invention, from a fluid (A), which contains a plurality of substances to be separated, an object substance is isolated by means of a simulated moving bed (B).

### (A) Stock Solution Containing a Plurality of Substances

Stock solutions to which the present invention is applicable are not specifically limited. Examples thereof are solutions containing compounds used in the domains of medicinals, pesticides, food stuff, livestock feed, perfumes, etc. such as thalidomide, chloroquin, etc., which are medicinals; EPN, which is an organic phosphorus pesticide; monosodium salt of glutamic acid which is a seasoning material, menthol, which is used in perfumery.

Also mixtures of optical isomers of optically active alcohols, esters, amines, amides, carboxylic acids, etc. are included. Examples thereof are mixtures of diastereomers such as optically active tartaric acid esters of amino acids, optically active camphorsulfonic acid esters of amines, etc.; mixtures of structural isomers such as cistrans position isomers, etc.

Further, the process of the present invention is applicable to separation of a mixture of normal hexane and cyclohexane; a mixture of compounds which have boiling points close to each other, such as hydrocarbons, alcohols, aldehydes and ketones; an aqueous solution containing glucose and fructose; a mixture of maltose and polysaccharides larger than maltotriose; a mixture of isomerized sugars including oligosaccharides; a mixture of fatty acids and triglycerides, etc.

Also drugs described in the 1980 edition of "US Pharmaceutical Dictionary of Drug Names" and pesticides described in "The Pesticide Manuals" (1979), are included in the sub stances to which the process of the present invention is applicable.

Among the above-mentioned, solutions containing mixtures of optical isomers, a mixture of diastereomers, a mixture of structural isomers, etc. can be referred to as the materials to which the process of the present invention is most suitable to apply.

### (B) Apparatus for Simulated Moving Bed Chromatography

The simulated moving bed chromatographic apparatus employed in the process of the present invention comprises a circulation circuit consisting of a plurality of columns packed with a solid adsorbent and an inlet port and an outlet port. In the circuit, there are set up a first inlet, through which a supercritical fluid is introduced; a first outlet, through which a fluid which is rich in the adsorbed and desorbed substance (called extract) is taken out; a second inlet, through which a stock solution containing a plurality of substances is introduced together with a supercritical fluid; and a second outlet, through which the solution rich in non-adsorbed substances (called raffinate) is taken out, in the direction of the fluid flow in this order in every several columns. The apparatus is further provided with valve means which is able to shift the position of the first and second inlet and the first and second outlet column by column at a predetermined interval. In operation, the stock solution and the supercritical fluid are introduced into the circuit through the second inlet port and the raffinate and extract are taken out through the first and second outlet. An additional amount of the supercritical fluid as an elutant is supplied into the circuit via the first inlet.

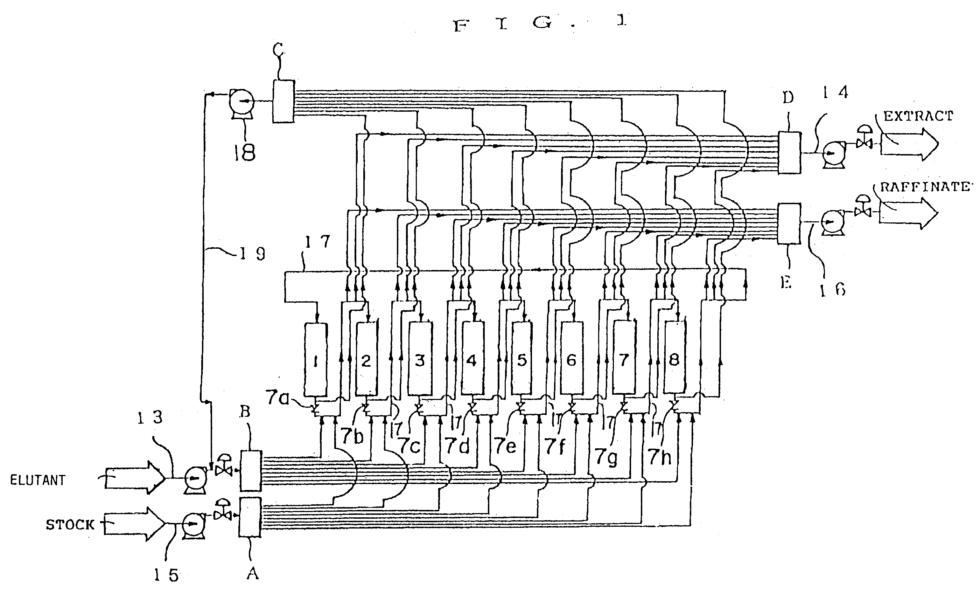

An example of the simulated moving bed choromatographic apparatus is illustrated in Fig.1. This apparatus comprises 8 unit columns. An elutant, i.e., a supercritical fluid is supplied to the columns by means of line (conduit) 13, a pump, a rotary valve means B, a plurality of conduits and check valves 7a - 7h. A stcck solution is supplied to the colums by means of a line (conduit) 15, a rotary valve A, a plurality of conduits and check valves 7a - 7h. The first conduit from the rotary valve B and the first conduit from the rotary valve A (shown as the uppermost lines of each of the two sets of 8 parallel lines in the bottom of Fig. 1) can send the supercritical fluid and the stock solution to the second unit columns via check valve 7a. In the same manner the second conduits can send them to the third unit column, the third conduits to the fourth column and so forth. The extract can be taken out of any of the unit columns via a line (conduit) 14 by operation of the rotary valve D and a pump related thereto. The raffinate can be taken out via a line (cornuit) 16 by operation of the rotary valve E and a pump related thereto. The remaining stock solution and a part of the supercritical fluid are recirculated through a line (conduti) 17. A part of the supercritical fluid is recirculated to the the first unit columns via a rotary valve C, pump 18 and line (conduit) 19.

The rotary valves are controlled so that the desired inlets and outlets are opened. More particularly, the working first inlet, the working first outlet, the working second inlet and the working second outlet, which are set in every second column, for instance, in this case, are shifted column by column in the direction of the fluid flow at a -predetermined intervals. The operation of the rotary valves is automatically controlled. The apparatus represented by Fig. 1 can be constructed by those skilled in the art without further detailed explanation.

There is no limitation in the number of columns and it can be suitably determined in consideration of the operation scale from the viewpoint of chemical engineering.

The internal pressure of the circulation circuit is kept at a pressure which maintains the elutant fluid at a supercritical state Practically it is not lower than 60 atm., and preferably not lower than 70 atm. The temperature of the circuit is usually not lower than 30 ^{o}C and preferably not lower than 40 ^{o}C.

If the pressure is lower than the above-mentioned, the elutant fluid cannot be maintained in the liquid state and thus it is circulated in the gaseous state, which invites drop in the separation efficiency. The temperature range lower than the above-mentioned lowers the separation efficiency as well.

### Supercritical Fluid

The term "supercritical fluid" means, a fluid which can exist as a liquid at a temperature over the critical temperature and a pressure over the critical pressure. Specific examples of usable substances, which can be in this state, are carbon dioxide, nitrous oxide, ammonia, sulfur dioxide, hydrogen halides, hydrogen sulfide, methane, ethane, propane, ethylene, propylene, halogenated hydrocarbon, etc.

Among these carbon dioxide is most preferable when explosiveness, toxicity to human being, etc. are considered. When this gas is employed as a supercritical fluid, it is used at a pressure of not lower than 31.3 ^{o}C and at a pressure of not lower than 79.9 atm., which are the critical conditions of this gas.

A small amount of a solvent can be mixed with said supercritical fluid.

Examples of the usable solvents are alcohols such as ethanol, methanol, 2-propanol, etc.; organic acids such as acetic acid propionic acid, etc.; amines such as diethyl amine, monoethanolamine, triethylamine, etc.; aldehydes such as acetaldhyde, etc.; ethers such as tetrahydrofuran, ethylether, etc.

The usable solid adsorbents are also not limited insofar as they adsorb a specific ingredient in the stock solution. Examples of the usable adsorbents are silica gel, ion exchange resins, zeolite; silica gel, those whose surface is chemically modified or coated with a polymer, etc. An example of the surface-modified silica is ODS.

In the present invention, a filler (adsorbent) for separation of optical isomers can be suitably used.

As fillers for optical resolution, silica gel, on which an optically active compound, a low molecular compound having optical resolution ability, a protein or a derivative thereof is carried, or a solid adsorbent comprising any of the above-mentioned compounds per se in the particulate form without any carrier can be used.

Examples of the above optically active substances are polysaccharide ester derivatives, polysaccharide carbamate derivatives, polyacrylate derivatives, polyamide derivatives, etc.

The polysaccharides of the above-mentioned polysaccharide ester derivatives and polysaccharide carbamate derivatives are not specifically limited insofar as they are optically active. Examples thereof are naturally occurring polysaccharides, modified natural polysaccharides, synthesized polysaccharides, oligo sugars, etc.

Specific examples of the above-mentioned polysaccharides are α-1,4-glucan (amilose, aminopectin), β-1,4-glucan (cellulose), α-1,6-glucan (dextran), β-1,3-glucan (curdlan, disofilan,etc.), α-1,3-glucan, β-1,2-glucan (Crawn-Gall polysaccharide), α-1,6-mannan β-1,4-mannan, β-1,2-fructan (inulin), β-2,6-fructan (levan), β-1,4-xylan, β-1,3-xylan, β-1,4-chitosan, β-1,4-N-acetylchitosan (chitin), pullulan, agalose, arginic acid, etc.
33 Among these, cellulose, amilose, β-1,4-xylan, β-1,4-chitosan, chitin, etc. are most preferred.

The upper limit of the number-average degree of polymerization (an average number of pyranose or flanose contained in one molecule) of these polysaccharides is not more than 2,000 and preferably not more than 500 in view of easiness of handling.

Examples of the above-mentioned oligo sugars are maltose, malt-tetraose, maltpentaose, malthexaose, maltheptaose, isomaltose, eluose, paratinose, maltitol, malt-orisotol, malt-tetraisotol, isomaltitol, α-cyclordextrin, β-cyclodextrin, γ-cyclodextrin, etc.

The above-mentioned polysaccharide ester derivatives and polysaccharide carbamate derivatrives are the polysaccharide compounds, in which at least one of the hydrogen atoms of their hydroxyl or amino groups is substituted with one of the groups represented by the following chemical formulas. 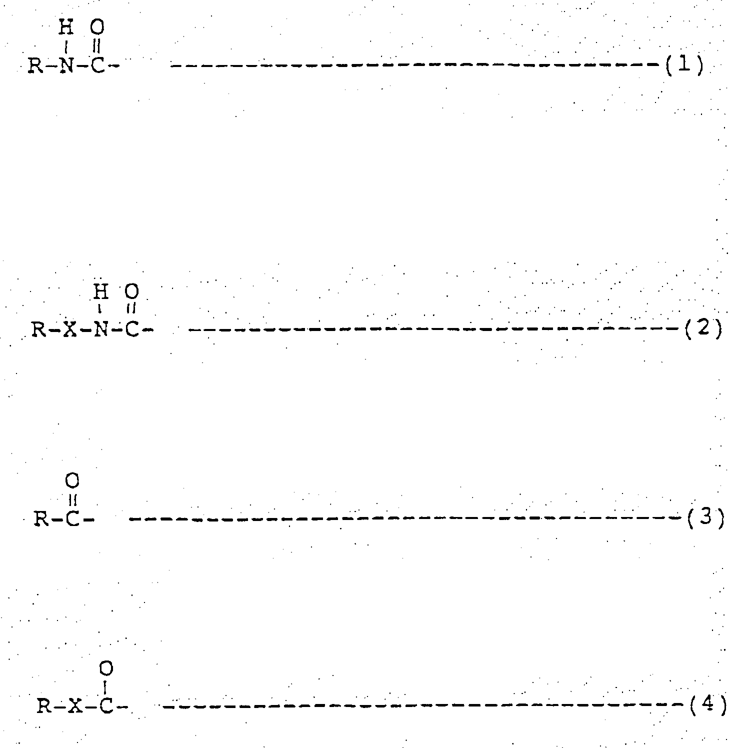
wherein R stands for an ordinary or heterocyclic aromatic hydrocarbyl group unsubstituted or substituted with an alkyl group or groups having 1 - 12 carbon atoms, an alkoxy group or groups having 1 - 12 carbon atoms, an alkylthio group or groups having 1 - 12 carbon atoms, a cyano group or groups, a halogen atom or atoms an acyl group or groups having 1 - 8 carbon atoms, an acyloxy group or groups having 1 - 8 carbon atoms, a hydroxyl group or groups, an alkoxycarbonyl group -or groups having 1 - 12 carbon atoms, a nitro group or groups, an amino group or groups, and a dialkylamino group or groups having 1 - 8 carbon atoms.

Examples of the above aromatic hydrocarbyl groups are phenyl, naphthyl, phenantholyl, anthranyl, indenyl, indanyl, furyl, thionyl, pyryl, benzofuryl, benzothionyl, indyl, pyridyl, pyrimidyl, quinolyl, isoquinolyl, etc. Among these, phenyl, naphthyl and pyridyl are most preferred.

X stands for a divalent hydrocarbyl group having 1 - 4 carbon atoms, which may contain a double bond or bonds and a triple bond. Examples of X are methylene, ethylene, ethylydene, ethenylene, 1,2- or 1,3-propylene, 1,1- or 2,2-propylidyne, etc.

The degree of substitution with the above groups is not less than 30 %, preferably not less than 50 % and more preferably not less than 80 %.

The above-described polysaccharides which may have substituents can be prepared by reacting an acid chloride or an isocyanate with the hydroxyl or amino groups of the poly saccharides.

Examples of the above-described low molecular compounds having optical resolution ability are crown ether and derivative thereof, cyclodextrins and derivatives thereof.

Examples of the above-described proteins and derivatives thereof are various kinds of antibody proteins, α₁-acidic sugar proteins, various kinds of serum albumins, egg-white protein, and derivatives of these, etc.

In the process of the present invention, particles of the above-described optically active compounds, low molecular compounds having optical resolution ability, proteins or derivatives thereof can be used as a filler for separation of optical isomers. In this case, size of the particles of said optically active compounds, low molecular compounds having optical resolution ability, proteins or derivatives thereof is usually 1 µm - 1 mm and preferably 5 µm - 300 µm, although it depends on the sized of the columns used.

The particle of said optically active compounds, low molecular compounds having optical resolution ability, proteins or derivatives thereof may be non-porous but preferably should be porous. When they are porous, the pore diameter is 10 A - 100 µm and preferably 10 A - 5,000 A.

In the process of the present invention, said optically active compounds, low molecular compounds having optical resolution ability, proteins or derivatives thereof, which are carried on a suitable carrier, can be used.

Any organic and inorganic carrier can be used insofar as they can carry said optically active compounds, low molecular compounds having optical resolution ability, proteins or derivatives thereof.

Examples of the organic carrier are polystyrene, polyacrylamide, polyacrylate, etc.

Examples of the inorganic carrier are silica gel, alumina, magnesia, glass, kaolin, titanium oxide, silicate salts, diatomaceous earth, etc.

Of these, silica gel, alumina and silicate salts are most preferred.

These carriers may be those which have been treated for modification of their surface properties.

The size of these carriers is 1 µm - 1 mm and preferably 5 µm - 300 µm. The carriers may be non-porous although to be porous is preferable. When porous carriers are used, the pore diameter is 10 Å - 100 µm, preferably 100 Å - 5,000 Å.

The amount of said optically active compounds, low molecular compounds having optical resolution ability, proteins or derivatives thereof to be carried on a carrier is usually 1 - 100 wt%, preferably 5 -50 wt% of the carrier. With an amount less than 1 wt%, optical resolution of a stock solution containing a plurality of substances cannot be effectively effected. With an amount in excess of 100 wt%, no technical effect corresponding to the amount is not expected.

For the process of the present invention, solid adsorbents comprising particles of cellulose ester derivatives, cellulose carbamate derivatives or silica gel carrying these compounds are preferred.

Specifically, "CHIRALCEL OA", "CHIRALCEL OB", "CHIRALCEL OC", "CHIRAL CEL OD", "CHIRALCEL OJ", "CHIRALCEL OG", "CHIRALCEL OF", "CHIRALPAK AS", "CHIRALPAK AD", "CROHWNPAK CR(;)", "CHIRALCEL CA-1", "CHIRALCEL OK", "CHIRALPAK WH", "CHIRALPAK WM", "CHIRALPAK WE", "CHIRALPAK OT(+)", "CHIRALPAK OP(+)", etc, (all registered trademarks of Daicel Chemical Industries, Ltd.) marketed by said company.

The average particle size of the solid adsorbent varies depending on species of the components to be separated, volume velocity of the fluid which flows through the simulated moving bed, etc., but it is usually 1 - 100 µm, preferably 5 - 100 µm. However, it is desirable to use an adsorbent having an average particle diameter of 20 - 100 µm in order to keep the pressure loss small in the simulated moving bed. In these particle size range, the pressure loss in the simulated moving bed is small and the pressure loss will be kept at not more than 10 kgf/cm². On the other hand, the larger the particle size, the smaller the number of the theoretical plates of the bed. Therefore, if only the achievement of the practical number of theoretical plates for adsorption is considered, the average particle size of said solid adsorbent should be 20 - 50 µm.

Separation by the Simulated Moving Beds Chromatography

In the process of the present invention, separation of a stock solution containing a plurality of ingredients by the simulated moving bed chromatography is continuously carried out by circulating the solution through an adsorption step (1), a purification step (2), a desorption step (3) and an elutant recovery step (4).

### (1) Adsorption Step

A stock solution containing a plurality of ingredients are contacted with a solid adsorbent and the adsorbable ingredient is adsorbed on the adsorbent and non-adsorbable ingredients are recovered as raffinate together with the supercritical fluid used.

### (2) Purification Step

The solid adsorbent which has adsorbed the adsorbable ingredient is contacted with the recirculated extract, which is explained below, so that the non-adsorbable ingredient which remains in the bed is removed.

### (3) Desorption Step

The solid adsorbent, which has adsorbed the adsorbable ingredient, is contacted with the supercritical fluid as an elutant and thus the adsorbed ingredient is desorbed from the adsorbent, and taken out of the simulated moving bed as an extract together with the supercritical fluid.

### Elutant Recovery Step

The adsorbent, which retains substantially only the supercritical fluid, is contacted with a part of the raffinate and a part of the supercritical fluid in the adsorbent is recovered.

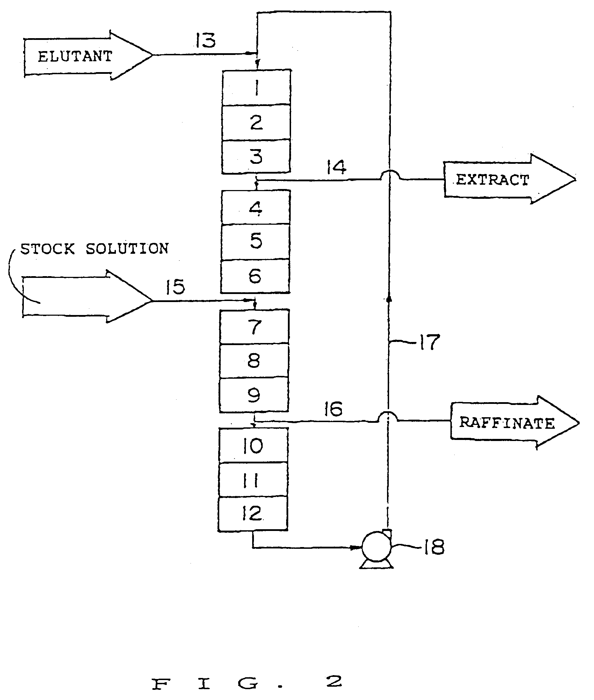

Now the steps (1) to (4) will be explained in detail with reference to Fig. 2.

In Fig. 2, 12 unit columns (1 - 12) packed with a solid adsorbent and each provided with an-inlet and an outlet are connected in series endlessly so that a fluid can continuously flow therethrough. At the first step, an elutant, that is, a supercritical fluid is introduced into column 1 via a first inlet through an elutant supply line 13. The extract is taken out of column 3 via a first outlet through an extract outlet line 14. A stock solution containing a plurality of ingredients is introduced into column 7 via a second inlet through a stock supply line 15. The raffinate is taken out of column 9 through a raffinate outlet line 16. The stock solution and the elutant are recirculated through a conduit 17 by means of a pump 18.

At the state shown in Fig. 2, desorption is effected in the unit columns 1 - 3, purification is effected in the unit columns 4 - 6, adsorption is effected in the columns 7 - 9 and recovery of the elutant, i.e., supercritical fluid is effected in the columns 10 - 12.

In operating this simulated moving bed, the elutant supply line, the extract outlet line, the stock supply line -and the raffinate outlet line are shifted column by column by operation of valves for instance at a predetermined interval.

That is, at the second step, desorption is effected in the columns 2 - 4, purification is effected in the columns 5 - 7, adsorption is effected in the columns 8 - 10 and recovery of the supercritical fluid is effected in the columns 11 - 1. In the same manner, the columns in which each step is carried out are shifted successively. Thus separation of a stock solution containing a plurality of ingredients is continuously and efficiently achieved.

The extract, which is taken out of the above simulated moving bed contains the object ingredient at a high percentage of not less than 90 %. Specifically, in the case of separation of optically active substances, the extract contains the object optical isomer at a percentage of not less than 95 % or not less than 98 %. The raffinate contains the other optical isomer at the same level of optical purity.

Needless to say, the apparatus is not limited to those shown in Fig. 1 and 2, but simulated moving bed of various types can be used.

The invention is now specifically illustrated by way of working examples. However, the invention is not limited thereto but can be suitably modified within the scope that does not deviate from the spirit of the invention.

### Example 1

To a simulated moving bed chromatographic apparatus comprising 8 columns 1 cm in the inner diameter and 250 cm in length packed with cellulose tris-(3,5-dimethlphenyl carbamate) carried on silica gel ("CHIPALCEL OD"® marketed by Daicel Chemical Industries, Ltd., particle diameter: 20 µm), which is an adsorbent for optical resolution, trans-stilbene oxide was supplied at a rate of 1.5 ml/min (the concentration of racemic modification was 10 mg/ml) and the chromatographic separation was carried out under the following conditions. Two columns are allotted to each step.
Supercritical fluid: carbon dioxide/ethanol 3 : 0.2 (vol) mixture
Rate of feeding of the supercritical fluid: 50 ml/min
Flow rate at the extract outlet: 35 ml/min
Flow rate at the raffinate outlet: 16.5 ml/min
Interval of column shift: 2.5 min
Temperature of the simulated moving bed : 60 ^{o}C
Pressure in the simulated moving bed (back pressure at the outlet): 100 kgf/cm²
(+)-Trans-stilbene oxide having an optical purity of 96 %ee was obtained from the extract outlet at a rate of 5.1 mg/min and (-)-trans-stilbene oxide having an optical purity of 99% ee was obtained from the raffinate outlet at a rate of 4.9 mg/min.

### Example 2

To a simulated moving bed chromatographic apparatus comprising 8 columns 1 cm in the inner diameter and 250 cm in length packed with cellulose tri(p-methylbenzoate) carried on silica gel ("CHIRALCEL OJ" marketed by Daicel Chemical Industries, Ltd., particle diameter: 20 µm), which is an adsorbent for optical resolution, α-tritylbenzyl alcohol was supplied at a rate of 2.5 ml/min (the concentration of racemic modification was 12 mg/ml) and the chromatographic separation was carried out under the following conditions.
Supercritical fluid: carbon dioxide/2-propanol 3 : 0.2 (vol)
Rate of feeding of the supercritical fluid: 50 ml/min
Flow rate at the extract outlet: 32 ml/min
Flow rate at the raffinate outlet: 20.5 ml/min
Interval of column shift: 11 min
Temperature of the simulated moving bed: 60 ^{o}C
Pressure in the simulated moving bed (back pressure at the outlet: 100 kgf/cm²
(+)-α-Tritylbenzyl alcohol having an optical purity of 90.5 %ee was obtained from the extract outlet at a rate of 6.3 mg/min and (-)-α-tritylbenzyl alcohol having an optical purity of 99 %ee) was obtained from the raffinate outlet.

According to the present invention, the number of theoretical plates of the columns is enhanced. That is, the present invention provides a simulated moving bed chromatographic separation process which is excellent in separation efficiency and operation efficiency. The concentration of the resulting solution is eliminated since the the elutant is automatically removed by vaporization.

## Claims

1. A simulated moving bed chromatographic process for separating a mixture of substances comprising: forming a circulation circuit Consisting of a plurality of columns each provided with an inlet port and an outlet port and packed with a solid adsorbent, said columns being serially and endlessly connected; introducing a supercritical fluid as an elutant into a first unit column via its inlet port (a first inlet) for forced circulation through the circuit; letting said fluid desorb the substance adsorbed in said column and several columns that follow; taking out a solution rich in the substance which has been adsorbed in these columns and desorbed therefrom via an outlet port (a first outlet) of the last one of these columns; intorducing a stock solution containing a plurality of substances to be separated into a next column via the inlet port thereof (a second inlet) making the object substance adsorbed on the absorbent in said column and several columns that follow; taking out the raffinate which has not been adsorbed in these columns via an outlet port of the last columns of these columns (a second outlet); passing the remaining solution and supercritical fluid through several unit columns that follow and recirculating them to the first column, shifting the working first inlet, the working first outlet, and the working second inlet and the working second outlet successively in the direction of the fluid flow column by column at a predetermined interval and thus separating the adsorbable substance and the non-adsorbable substances.

2. The simulated moving bed chromatographic method of separation as claimed in claim 1, wherein the solid adsorbent is a filler for optical resolution.

3. The simulated moving bed chromatographic separation process as claimed in claim 1, wherein the solid adsorbent is selected from a group consisting of particles of a cellulose ester derivative, particles of a cellulose carbamate derivative and those substances carried on a carrier.

4. The simulated moving bed chromatographic separation process as claimed in claim 1, wherein the mixture of substances to be separated is a mixture or optical isomers, a mixture of diastereomers, or a mixture of structural isomers.

5. The simulated moving bed chromataographic separation process as claimed in claim 1, wherein each one-fourth of the total columns is alloted to the desorption step, the purification step. the desorption step and the elutant recovery step.
